# EUROPEAN PATENT APPLICATION

(11) **EP 1 160 289 A2**
(43) Date of publication of application: **05.12.2001**
(21) Application number: 01304027.4
(22) Date of filing: 02.05.2001
(51) Int. Cl.: C08L 83/07

(54) **Silicone rubber composition for extrusion molding and method of fabrication**

(30) Priority: 31.05.2000 JP 2000162974
(71) Applicant: Dow Corning Toray Silicone Co., Ltd., Tokyo (JP)
(72) Inventor: Hirai, Kazuo, Dow Corning Toray Silicone Co., Ltd., Ichihara-shi, Chiba Prefecture (JP); Baba, Katsuya, Dow Corning Toray Silicone Co. Ltd., Ichihara-shi, Chiba Prefecture (JP); Honma, Hiroshi Dow Corning Toray Silicone Co. Ltd., Ichihara-shi, Chiba Prefecture (JP)
(74) Representative: Kyle, Diana

(57) **Abstract**

A silicone rubber composition for extrusion molding applications has a high cure rate and provides silicone rubber extrusion moldings that post-cure and are either free of bubbles or contain bubbles to an extremely limited extent. It contains (A) an organopolysiloxane gum, (B) reinforcing silica, (C) diatomaceous earth powder or quartz powder, and (D) an organoperoxide with the formula R - COOOCOO - R¹ - OOCOOOC - R, wherein R is a group selected from alkyl, alkoxy, -SiR²₃, -CH₂SiR²₃, and -Ph-R³_{c} (R² is alkyl or alkoxy; Ph is phenyl when c is 0, and phenylene when c is 1,2 or 3; R³ is alkyl, alkoxy, SiR²₃, or -CH₂SiR²₃; and **c** is 0 to 3) and R¹ is C₁ to C₁₀ alkylene. A method is described for fabricating silicone rubber extrusion moldings by curing the silicone rubber composition in a hot gas.

## Description

This invention is directed to a silicone rubber composition for extrusion molding applications, hereafter referred to as an extrusion-grade silicone rubber composition, and to a method for fabricating silicone rubber extrusion moldings.

More particularly, the invention relates to a silicone rubber composition that can be used to produce such extrusion moldings as tubes, sheet, coatings for electric wire and cable, and architectural and construction gaskets. The invention additionally relates to a method for fabricating such silicone rubber extrusion moldings.

Silicone rubbers are characterized by an excellent resistance to heat, cold, and weathering, and by excellent electrical properties. As a consequence, they are widely used as extrusion moldings for tubes, tapes, sheet, coatings for electric wire and cable, and architectural and construction gaskets. Chlorinated benzoyl peroxides such as 2,4-dichorobenzoyl peroxide and chlorobenzoyl peroxide have been used as curing agents for curing the silicone rubber compositions used as extrusion molding stock. However, silicone rubber compositions containing such chlorinated benzoyl peroxides evolve an unpleasant odor during cure, and provide silicone rubber moldings that suffer post-cure from blooming on the molding surface. As used herein, blooming refers to a whitening of the molding surface due to gradual precipitation at the molding surface of degradation products from the curing agent.

In order to solve these problems, Japanese Patent Application Laying Open Number Sho 59-18758 (18,758/1984) provides a silicone rubber composition in which bis(orthomethylbenzoyl)peroxide is blended as curing agent. Japanese Patent Application Laying Open Number Sho 62-185750 (185,750/1987)/US 4,743,671 (May 10, 1988) provides a silicone rubber composition in which bis(para-methylbenzoyl)peroxide is blended as curing agent.

These compositions, however, still suffer from a number of disadvantages that prevent them from being satisfactory for extrusion molding applications. Thus, they exhibit a slow cure rate, and bubbles are produced within the moldings. As a consequence, the moldings have reduced electrical insulation performance.

Therefore, the present invention relates to the use of a special class of organoperoxides as curing agent for a silicone rubber composition with a specific composition. Thus, an object of the invention is to provide an extrusion-grade, silicone rubber composition that has a high cure rate, and provides silicone rubber extrusion moldings that post-cure and are either free of bubbles or contain bubbles to an extremely limited extent. An additional object is to provide a method for fabricating silicone rubber extrusion moldings. These and other features of the invention will become apparent from a consideration of the detailed description.

The invention relates to an extrusion-grade silicone rubber composition comprising:
(A) 100 weight parts an organopolysiloxane gum,
(B) 15 to 150 weight parts of a reinforcing silica,
(C) 0.1 to 150 weight parts of diatomaceous earth powder or quartz powder, and
(D) 0.1 to 10 weight parts of an organoperoxide of the formula

   R - COOOCOO - R¹ - OOCOOOC - R

   where R is an alkyl group, an alkoxy group, a group such as -SiR²₃, a group such as -CH₂SiR²₃, or a group such as -Ph-R³_{c}, in which R² is an alkyl group or an alkoxy group, Ph is phenyl when c is 0, and phenylene when c is 1,2 or 3. R³ is an alkyl group, an alkoxy group, a group such as -SiR²₃, or a group such as
   -CH₂SiR²₃, c is 0 to 3; and R¹ is a C₁ to C₁₀ alkylene group.

The invention also relates to a method for fabricating silicone rubber extrusion moldings. It is characterized by introducing the above extrusion-grade silicone rubber composition into an extrusion molder, forming an uncured silicone rubber molding, and forming a silicone rubber molding, by curing the uncured silicone rubber molding at ambient pressure in a hot gas at 200 to 600 °C.

Component (A) is the base of the composition and preferably has a viscosity at 25 °C of at least 1,000,000 mPa·s, and more preferably at least 5,000,000 mPa·s. In addition, the Williams plasticity of Component (A) should be at least 50, preferably at least 100, and more preferably at least 120. Component (A) should have a degree of polymerization of 3,000 to 20,000, and a weight-average molecular weight of at least 20 x 10⁴. Useful as Component (A) are silicone gums used as bases in organoperoxide-curing millable silicone rubber compositions.

Component (A) is exemplified by organopolysiloxane gums with the average unit formula RₐSiO_{(4-a)/2} in which a is 1.8 to 2.3, and R is monovalent hydrocarbyl group or a halogenated alkyl group. The monovalent hydrocarbyl group encompassed by R is exemplified by alkyl groups such as methyl, ethyl, and propyl; alkenyl groups such as vinyl and allyl; cycloalkyl groups such as cyclohexyl; aralkyl groups such as β-phenylethyl; and aryl groups such as phenyl and tolyl. The halogenated alkyl group encompassed by R is exemplified by the 3,3,3-trifluoropropyl and 3-chloropropyl groups. The organopolysiloxane gum preferably contains at least 50 mole percent methyl groups, and is preferably an alkenyl-functional diorganopolysiloxane where the alkenyl group is exemplified by vinyl, allyl, propenyl, and hexenyl groups, but is preferably a vinyl group. The vinyl group should be 0.01 to 0.4 mole percent of the total of the organic groups in the molecule. The molecular structure of Component (A) can be a straight chain, or it can have a branch-containing straight chain structure.

Component (A) can be a homopolymer, copolymer, or mixture of such polymers. The siloxane unit or units constituting Component (A) is exemplified by the dimethylsiloxane unit, methylvinylsiloxane unit, methylphenylsiloxane unit, and the (3,3,3-trifluoropropyl)methylsiloxane unit. The group or groups present in the molecular chain terminal position are exemplified by trimethylsiloxy, dimethylvinylsiloxy, methylvinyl hydroxysiloxy, and dimethyl hydroxysiloxy. The organopolysiloxane gum is exemplified by trimethylsiloxy endblocked methylvinylpolysiloxane gums, trimethylsiloxy endblocked dimethylsiloxane-methylvinylsiloxane copolymer gums, dimethylvinylsiloxy-endblocked dimethylpolysiloxane gums, dimethylvinylsiloxy-endblocked dimethylsiloxane-methylvinylsiloxane copolymer gums, dimethylhydroxysiloxy-endblocked dimethylsiloxane-methylvinylsiloxane copolymer gums, methylvinylhydroxysiloxy-endblocked dimethylsiloxane-methylvinylsiloxane-methylphenylsiloxane copolymer gums, and methylvinylhydroxysiloxy-endblocked dimethylsiloxane-methylvinylsiloxane-(3,3,3-trifluoropropyl)methylsiloxane copolymer gums.

Reinforcing silica (B) is an essential component and provides the composition with the ability to maintain its extruded shape. It also imparts mechanical strength to the cured silicone rubber. The reinforcing silica (B) can be dry-process silica such as fumed silica, or a wet-process silica such as precipitated silica. In either case, it can be used as such or after surface hydrophobicization with an organosilicon compound such as an organochlorosilane, hexaorganodisilazane, or a diorganocyclosiloxane oligomer. Component (B) preferably has a BET specific surface area of at least 50 m²/g. Component (B) should be used in the range of 15 to 150 weight parts per 100 weight parts of the Component (A). The use of less than 15 weight parts of (B) results in a reduced mechanical strength and reduced ability to maintain the extruded shape. On the other hand, it is difficult to blend more than 150 weight parts of (B) into Component (A).

Component (C) is essential and functions to minimize the post-cure surface tack of the silicone rubber molding, and it accelerates the cure rate through a synergistic interaction with Component (D). The diatomaceous earth powder encompassed by Component (C) preferably has an average particle size in the range of 1 to 20 µm, more preferably in the range of 1 to 15 µm, and a linseed oil absorption in the range of 100 to 200 mL/100 g. In addition, the diatomaceous earth is preferably a calcined product, more preferably a flux-calcined product. The quartz powder should have an average particle size in the range of 1 to 20 µm, more preferably in the range of 1 to 15 µm.

Component (C) can be used at 0.1 to 150 weight parts, preferably 1 to 50 weight parts, in each case, per 100 weight parts of Component (A). The effects noted above do not appear at less than 0.1 weight part, while the rubbery character of the silicone rubber is impaired at above 150 weight parts.

Organoperoxide (D) is the curing agent for the composition and has the formula

R - COOOCOO - R¹ - OOCOOOC - R

where R¹ is a C₁ to C₁₀ alkylene group and R is selected from an alkyl group, an alkoxy group, the group -SiR²₃, the group -CH₂SiR²₃, and the group -Ph-R³_{c} in which R² is an alkyl group or an alkoxy group, Ph is phenyl when c is 0, and phenylene when c is 1,2 or 3, R³ is an alkyl group, an alkoxy group, the group -SiR²₃, or the group -CH₂SiR²₃, and **c** is 0 to 3. Alkyl groups encompassed by R are exemplified by methyl, ethyl, and propyl groups, while alkoxy groups encompassed by R are exemplified by methoxy, ethoxy, and propoxy groups. Alkyl groups encompassed by R² are exemplified by methyl, ethyl, and propyl groups, while alkoxy groups encompassed by R² are exemplified by methoxy, ethoxy, and propoxy groups.

Component (D) can also be represented by the structure shown below in which R and R¹ are the same as defined above:

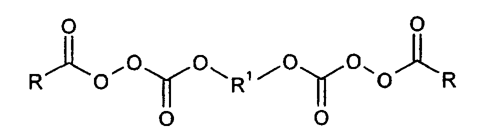

In particular, the organoperoxide (D) can be exemplified by compounds such as:

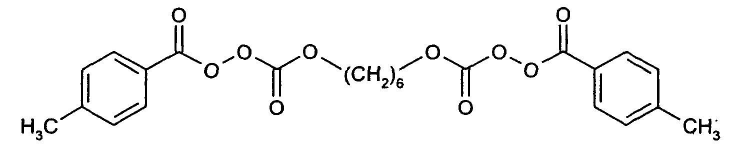

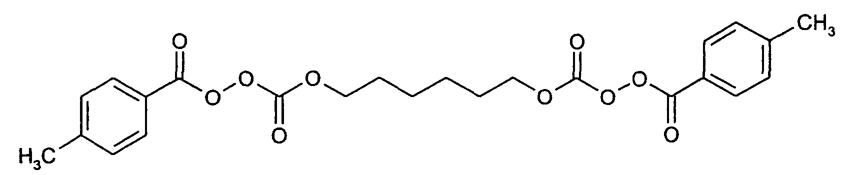

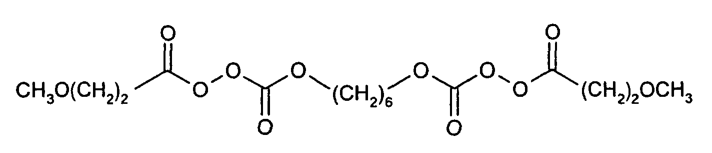

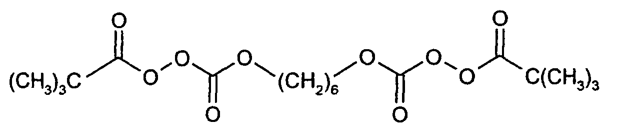

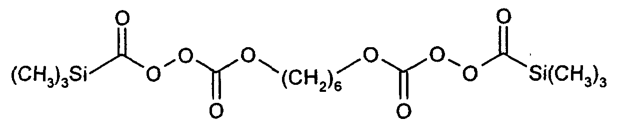

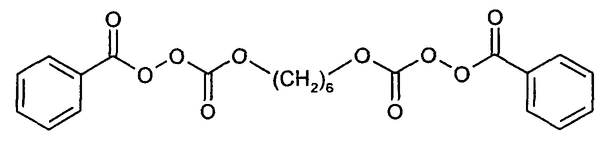

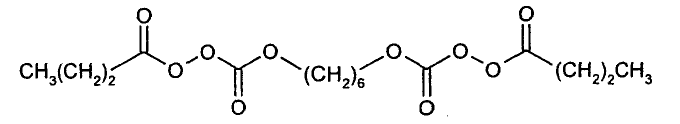

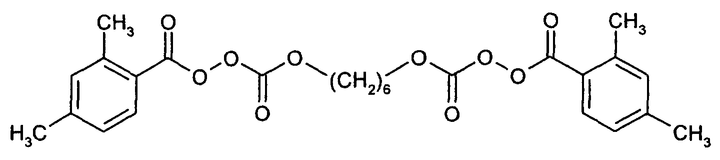

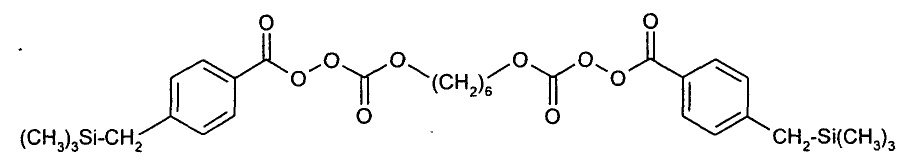

The composition of Components (A)-(D) may contain other additives for addition to silicone rubber compositions as long as objects of the invention are not impaired. These additives can be crepe-hardening inhibitors such as silanol-endblocked diorganosiloxane oligomers, organohydroxysilanes, and hexaorganodisilazanes; inorganic fillers such as calcium carbonate, carbon black, aluminum hydroxide, and alumina; heat stabilizers such as cerium hydroxide, cerium silanolate, and cerium salts of aliphatic acids; mold-release agents such as higher fatty acids and salts, e.g., stearic acid, zinc stearate, and calcium stearate; and flame retardants such as pigments, platinum compounds, fumed titanium dioxide, and zinc carbonate.

The silicone rubber composition of Components (A)-(D) should have a T₁₀ value no greater than 0.25 minute and a T₉₀ value no greater than 1.0 minute. The T₁₀ value is the time required for torque measured at 130 °C/10 minutes using a JSR Model III Curastometer to reach 10 percent of the maximum torque; while the T₉₀ value is the time required for torque measured at 130 °C/10 minutes using the JSR Model III Curastometer to reach 90 percent of the maximum torque. The JIS Model III Curastometer is a vulcanization testing instrument for determining the vulcanization rate of a standard rubber, and for measuring the vulcanization rate of a standard rubber, according to the specifications of the SRIS, i.e., Society of the Japanese Rubber Industry Standard, published in *Journal of the Rubber Industry of Japan*, Volume 46, Pages 53-61 (1973).

The composition can be prepared by intermixing Components (A)-(D) to homogeneity. In one method of preparation, Components (A) and (B) are mixed with each other in advance to prepare a silicone rubber base, and Component (C) followed by Component (D) are blended into the silicone rubber base. Preparation of the silicone rubber base can include addition of a surface treatment agent for the reinforcing silica (B) with mixing under heat. This surface treatment agent for the reinforcing silica can be a silanol-endblocked dimethylsiloxane oligomer, a silanol-endblocked methylvinylsiloxane oligomer, or a hexaorganodisilazane. The surface treatment agent is generally used in the range of 0.5 to 20 weight parts per 100 weight parts of Component (A).

Silicone rubber moldings can be fabricated from the composition by introducing the composition into a continuous extrusion molder to form an uncured silicone rubber molding, and subjecting the uncured silicone rubber molding to curing at ambient pressure in a hot gas at 200 to 600 °C, preferably 200 to 500 °C, to produce the silicone rubber molding. The extrusion molder can be any extrusion molder useful for extrusion molding of silicone rubber compositions such as a single-screw extrusion molder.

The composition has a high cure rate upon heating, and it cures to provide silicone rubber moldings that are either free of bubbles or that contain bubbles to a very limited extent. The surface of the composition also exhibits little tack during molding. The composition is useful in applications where such properties are critical such as extrusion molding stock for tubes, tapes, sheet, coatings for electric wire and cable, and construction and architectural gaskets.

The following examples are set forth in order to illustrate this invention in more detail. Working examples are provided to explain the extrusion-grade silicone rubber composition of the invention and a method for fabricating moldings in greater detail. Parts in the examples denotes weight parts. The following methods were used to measure curing characteristics and to evaluate the silicone rubber moldings for bubbles.

### Curing Characteristics

A small piece of silicone rubber composition was placed on the lower die of a JSR Curastometer Model III. Heat and shearing oscillation amplitude angle at 3° was applied, and the viscoelastic stress, i.e., torque value, accompanying cure was measured. Two values were determined from the curing curve measured at 130 °C/10 minutes, one being the time required to reach 10 percent of the maximum torque value achieved during curing designated as T₁₀, and the other being the time required to reach 90 percent of the maximum torque value achieved during curing designated as T₉₀.

### Presence or Absence of Bubbles

The silicone rubber molding was sectioned and the cut surface was evaluated for the presence of bubbles.

### Example 1

The following components were introduced into a kneader mixer and mixed to homogeneity under reduced pressure with heating to provide a silicone rubber base: (i) 100 parts of a dimethylvinylsiloxy-endblocked methylvinylorganopolysiloxane gum having a degree of polymerization of 5,000, and having 99.86 mole percent of dimethylsiloxane units and 0.14 mole percent of methylvinylsiloxane units; (ii) 50 parts of a dry-process silica with a BET specific surface area of 200 m²/g; and (iii) 7.0 parts of a silanol-endblocked dimethylsiloxane oligomer with a viscosity at 25 °C of 60 centistoke(mm²/s. After cooling, a silicone rubber compound was prepared by the further addition with mixing to homogeneity of 3.0 parts of diatomaceous earth powder having an average particle diameter of 7 µm and a linseed oil absorption of 150 mL/100 g. A silicone rubber composition was then prepared by milling a mixture of 1.0 part of dimethylpolysiloxane oil and 1.0 part of an organoperoxide with the structure: 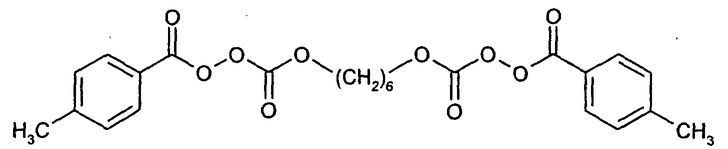 into 100 parts of the silicone rubber compound on a two-roll mill. A particle size analysis of the organoperoxide indicating that it had a maximum particle diameter of 50 µm and an average particle diameter of 20 µm. The resulting silicone rubber composition was measured to determine its curing characteristics.

The silicone rubber composition was also introduced into a single-screw extruder with a diameter of 65 mm, and was coated in a crosshead on a core wire with a diameter of 1.0 mm, to provide a coating thickness of 0.5 mm. Curing was then carried out with a 10-second traverse in a 7.2 m-long convection oven at 500 °C. The product was a silicone rubber-coated electric wire. In order to carry out the bubble evaluation, the core wire was pulled out of the silicone rubber-coated wire, and the cut surface of the rubber was inspected for the presence of bubbles. The results of the measurements are shown in Table 1.

### Example 2

The following components were introduced into a kneader mixer and were mixed to homogeneity under reduced pressure with heating to provide a silicone rubber base: (i) 100 parts of a dimethylvinylsiloxy-endblocked methylvinylorganopolysiloxane gum with a degree of polymerization of 5,000, and containing 99.86 mole percent of dimethylsiloxane units and 0.14 mole percent of methylvinylsiloxane units; (ii) 25 parts of a dry-process silica with a BET specific surface area of 200 m²/g; and (iii) 4.0 parts of a silanol-endblocked dimethylsiloxane oligomer with a viscosity at 25 °C of 60 centistoke(mm²/s). After cooling, a silicone rubber compound was prepared by the further addition with mixing to homogeneity of 5 parts of a quartz powder, i.e., Crystalite VX-S2 of Tatsumori Ltd., having an average particle diameter of 5 µm. A silicone rubber composition was then prepared by milling a mixture of 1.0 part of dimethylpolysiloxane oil and 1.0 part an organoperoxide with the structure: 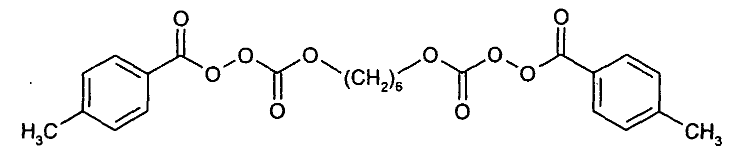 into 100 parts of the silicone rubber compound on a two-roll mill. The particle size analysis of the organoperoxide indicated that it had a maximum particle diameter of 50 µm and an average particle diameter of 20 µm. The resulting silicone rubber composition was measured to determine its curing characteristics.

The silicone rubber composition was also introduced into a single-screw extruder with a diameter of 65 mm, and was coated in a crosshead on a core wire with a diameter of 1.0 mm, to provide a coating thickness of 0.5 mm. Curing was then carried out by a 10-second traverse in a 7.2 m-long convection oven at 500 °C. The product was a silicone rubber-coated electric wire. For the bubble evaluation, the core wire was pulled out of the silicone rubber-coated wire, and the cut surface of the rubber was inspected for the presence of bubbles. The results of these measurements are shown in Table 1.

### Comparative Example 1

An extrusion-grade silicone rubber composition was prepared as in Example 1, but in this comparative example, bis(m-methylbenzoyl) peroxide was used instead of the organoperoxide in Example 1. The bis(m-methylbenzoyl) peroxide had a maximum particle diameter of 50 µm and an average particle diameter of 20 µm. The characteristics of the extrusion-grade silicone rubber composition were measured as in Example 1, and the results are shown in Table 1.

### Comparative Example 2

An extrusion-grade silicone rubber composition was prepared as in Example 1, but in this comparative example, bis(p-methylbenzoyl) peroxide was used instead of the organoperoxide in Example 1. The bis(p-methylbenzoyl) peroxide had a maximum particle diameter of 50 µm and an average particle diameter of 20 µm. The characteristics of the extrusion-grade silicone rubber composition were measured as in Example 1, and the results are shown in Table 1.

**Table 1.**

| | | Example 1 | Example 2 | Comparative Example 1 | Comparative Example 2 |
|---|---|---|---|---|---|
| curing characteristics | | | | | |
| | T₁₀ (min) | 0.20 | 0.22 | 0.27 | 0.28 |
| | T₉₀ (min) | 0.47 | 0.53 | 0.81 | 0.85 |
| presence/absence of bubbles | | absent | absent | present | present |

Because the silicone rubber composition of Components (A)-(D) employs a special class of organoperoxides as curing agent, it has a high cure rate, and is able to provide silicone rubber extrusion moldings that post-cure and are either free of bubbles or contain bubbles to an extremely limited extent.

## Claims

1. A silicone rubber composition for extrusion molding comprising
(A) 100 weight parts an organopolysiloxane gum,
(B) 15 to 150 weight parts of a reinforcing silica,
(C) 0.1 to 150 weight parts of diatomaceous earth powder or quartz powder, and
(D) 0.1 to 10 weight parts of an organoperoxide having the formula
R ― COOOCOO ― R¹―OOCOOOC ― R
where R is an alkyl group, an alkoxy group, the group -SiR²₃, the group -CH₂SiR²₃, or the group -Ph-R³_{c} ; in which R² is an alkyl group or an alkoxy group, Ph is phenyl when c is 0, and phenylene when c is 1,2 or 3, R³ is an alkyl group, an alkoxy group, the group -SiR²₃, or the group -CH₂SiR²₃, c is 0-3; and R¹ is a C₁ to C₁₀ alkylene group.

2. The composition according to Claim 1, in which Component (A) is an alkenyl functional diorganopolysiloxane.

3. The composition according to Claim 2, in which the alkenyl functional diorganopolysiloxane is a dimethylvinylsiloxy-endblocked dimethylsiloxane-methylvinylsiloxane copolymer.

4. The composition according to Claim 2 or 3, in which the alkenyl functional group in the alkenyl functional diorganopolysiloxane is vinyl, and the vinyl content is 0.01 to 0.4 mole percent.

5. The composition according to any of Claims 1 to 4, in which the diatomaceous earth powder has an average particle size of 1 to 20 *µ*m, and a linseed oil absorption of 100 to 200 mL/100 g.

6. The composition according to any of Claims 1 to 5, wherein component (A) has a Williams plasticity of at least 120.

7. The composition according to any of Claims 1 to 6, wherein component (A) has a degree of polymerization of 3,000 to 20,000 and a weight-average molecular weight of at least 20 x 10⁴.

8. The composition according to any of Claims 1 to 7, wherein component (C) has an average particle size in the range of 1 to 15 *µ*m.

9. The composition according to any of Claims 1 to 8, comprising 1 to 50 weight parts of component (C) per 100 weight parts of component (A).

10. A method of fabricating silicone rubber extrusion moldings comprising introducing the composition according to any of Claims 1 to 9, into an extrusion mold, forming an uncured silicone rubber molding, and forming a cured silicone rubber molding by curing the uncured silicone rubber molding at ambient pressure in a hot gas at a temperature of 200 to 600°C.
